# EUROPÄISCHE PATENTSCHRIFT

(11) **EP 2 277 728 B1**
(45) Veröffentlichungstag und Bekanntmachung des Hinweises auf die Patenterteilung: **15.05.2013**
(21) Anmeldenummer: 10169556.7
(22) Anmeldetag: 14.07.2010
(51) Int. Cl.: B60H 1/00

(54) **Klimaanlage**
Air conditioning device
Installation de climatisation

(30) Priorität: 14.07.2009 DE 102009033218
(43) Veröffentlichungstag der Anmeldung: 26.01.2011
(73) Patentinhaber: Behr GmbH & Co. KG, 70469 Stuttgart (DE)
(72) Erfinder: Schall, Matthias, 73760, Ostfildern-Ruit (DE)
(74) Vertreter: Grauel, Andreas

(56) Entgegenhaltungen:
- EP-A1- 1 514 707
- EP-A2- 0 212 306
- WO-A1-2008/068027

## Beschreibung

Die Erfindung betrifft eine Klimaanlage, insbesondere für ein Kraftfahrzeug, gemäß dem Oberbegriff des Anspruchs 1 sowie eine Klimaanlage, insbesondere für ein Kraftfahrzeug, gemäß dem Oberbegriff des Anspruchs 13.

Klimaanlagen werden in Kraftfahrzeugen eingesetzt, um den Fahrzeuginnenraum auf eine für die Fahrzeuginsassen angenehme Temperatur zu bringen bzw. diese zu halten. Bekannte Klimaanlagen weisen in der Regel einen Defrostmodus auf, in welchem sie betrieben werden, um eine Windschutzscheibe des Kraftfahrzeugs zu enteisen. Hierbei ist es wünschenswert, dass der der Windschutzscheibe zugeführte Luftstrom eine möglichst hohe Temperatur aufweist, um eine schnelle Enteisung zu gewährleisten.

Um auch gesetzlichen Anforderungen bezüglich der Schelbenenteisung zu entsprechen, ist im Stand der Technik eine Klimaanlage mit einem Klimakonzept entwickelt worden, bei dem die Luftverteilung und die Temperatur gekoppelt sind, wobei die Kopplung zwischen Temperatur und Luftverteilung so gewählt wurde, dass der Modus "Defrost" (Scheibenenteisung bez. Defrostbetrieb) der Klimaanlage nur in Verbindung mit der Temperatureinstellung maximaler Wärme möglich ist. Durch eine derartige Kopplung werden beschlagene Scheiben in kürzester Zeit enteist.

Eine das oben beschriebene Klimakonzept einsetzende Klimaanlage ist beispielsweise aus WO 2008/068027 A1 bekannt. Die dort offenbarte Klimaanlage weist ein Gebläse, einen Verdampfer, einen Heizer und eine kombinierte Misch- und Verteilerklappe auf, die in einem mehrteilig ausgebildeten Luftführungsgehäuse angeordnet ist. In dem Luftführungsgehäuse sind fünf Luftkanäle für die Zuführung der warmen, vom Heizer kommenden Luft (Warmluftkanal), für die Zuführung der kalten, direkt vom Verdampfer über einen Bypass vorbei am Heizer geleiteten Luft (Kaltluftkanal), für die Weiterleitung der gemischten, temperierten Luft zur Belüftung des Innenraums des Kraftfahrzeugs (Belüftungskanal), für die Weiterleitung der gemischten, temperierten Luft zum Fußraum (Fußraumkanal) und für die Weiterleitung der warmen Luft zum Entfrosten der Windschutzscheibe (Defrostkanal) ausgebildet. Die Öffnungen aller Luftkanäle sind im Bereich der Misch- und Verteilerklappe jeweils in einem 36°-Winkel ausgebildet. Die Öffnungen des Warmluftkanals und des Kaltuftkanals sind voneinander um 18° beabstandet. Die Mitte des Fußraumkanals ist diagonal gegenüberliegend der kaltluftkanalseitigen Seitenwand des Warmluftkanals angeordnet. Die Öffnungen des Belüftungskanals, des Fußraumkanals und des Defrostkanals sind in direkter Nachbarschaft voneinander angeordnet, wobei sich der Fußraumkanal mittig zwischen dem Belüftungskanal und dem Defrostkanal befindet. Die Misch- und Verteilerklappe weist äußere Klappenflächen auf, welche die Gestalt von Teilbereichen eines Zylinders aufweisen, und zwei auf der Luftsfrömungsseite vollständig eben ausgebildete, innere Klappenflächen, die in Luftströmungsrichtung aufeinander zulaufend angeordnet sind. Der Öffnungswinkel der inneren Klappenflächen beträgt dabei 20°. Die Drehachse der Klappe ist zentral zwischen den inneren Klappenflächen angeordnet.

Wenn die Misch- und Verteilerklappe in einer Stellung " 50% Belüftung / 50 % Fußraum" ist, sind 100 % der Öffnung des Kaltluftkanals und ca. 50 % der Öffnung des Warmluftkanals von der Misch- und Verteilerklappe freigegeben, so dass sich eine Mischtemperatur ergibt.

Im Falle der Stellung "100 % Fußraum" ist die Öffnung des Warmluftkanals vollständig freigegeben, während die Öffnung des Kaltluftkanals zu 50 % abgedeckt ist, so dass sich wiederum eine Mischtemperatur ergibt, die jedoch über der zuvor beschriebenen Mischtemperatur in der Stellung "50 % Belüftung / 50 % Fußraum" liegt.

Weiterhin werden z. B. in einer Stellung "50 % Fußraum / 50 % Defrost" dem Fußraumkanal und dem Defrostkanal ausschließlich Warmluft zugeführt. Der Kaltluftkanal ist dabei vollständig abgesperrt. Das gleiche gilt auch für die Stellung "100 % Defrost", so dass ausschließlich Warmluft zum Entfrosten der Windschutzscheibe eingesetzt wird.

Durch diese Konfiguration wird zwar einerseits ein schnelles Entfrosten der Windschutzscheibe sichergestellt, jedoch sind damit auch gewisse Nachteile verbunden. Beispielsweise können Betriebsfälle auftreten, bei denen die Koppelung der Luftverteilung und der Temperatur zu Diskomfortsituationen im Fahrzeug fuhren kann. Zum Beispiel ist bei feuchten Außenbedingungen (Regen, Nebel) und höheren Außentemperaturen (> 5°C) im Defrost-Modus eine höhere Luftmenge aus dem Defrostkanal bzw. aus dessen Austritt erforderlich, um den Scheibenbeschlag schnell und wirksam zu beseitigen. Da jedoch der Defrost-Modus an die maximale Temperatur gekoppelt ist, führt dies dann insbesondere bei den erwähnten höheren Außentemperaturen dazu, dass es in dem Fahrzeuginnenraum zu einem nicht erwünschten und für die Fahrzeuginsassen unangenehmen Temperaturanstieg kommt. Auch in südlichen Ländern mit besonderen Witterungsverhältnissen, wie zum Beispiel Monsun in Indien, ist es oft wünschenswert den Defrost-Modus nicht mit der maximalen Temperatur sondern mit kälteren Temperaturen zu betreiben.

Daher ist es die Aufgabe der vorliegenden Erfindung, eine Klimaanlage für ein Kraftfahrzeug der oben beschriebenen Art zu schaffen, bei weicher der Defrost-Modus nicht ausschließlich mit maximaler Temperatur sondern ebenfalls mit veränderbarer bzw. niedrigerer Temperatur betreibbar ist.

Die Aufgabe der vorliegenden Erfindung wird durch eine Klimaanlage mit den Merkmalen gemäß Anspruch 1 sowie durch eine Klimaanlage mit den Merkmalen gemäß Anspruch 13 gelöst. Vorteilhafte Weiterbildungen der vorliegenden Erfindung sind in den jeweiligen Unteransprüchen definiert.

Erfindungsgemäß wird eine Klimaanlage, insbesondere für ein Kraftfahrzeug, mit einem Luftführungsgehäuse bereitgestellt, in weichem eine Vielzahl von Luftkanälen ausgebildet ist, welche zumindest zwei zuführende Luftkanäle, welche einen Warmluftkanal und einen Kaltluftkanal umfassen, und zumindest drei weiterführende Luftkanäle, welche einen Belüftungskanal, einen Fußraumkanal und einen Defrostkanal umfassen, aufweisen, wobei zur Regelung der Lufttemperatur und Luftverteilung der dem Fahrzeuginnenraum zuzuführenden Luft eine kombinierte Misch- und Verteilerklappe vorgesehen ist, welche derartig ausgebildet ist, dass sie in einer Stellung, in welcher der eine zuführende Luftkanal vollständig geöffnet ist, den jeweils anderen zuführenden Luftkanal vollständig verschließt, wobei in einem Defrostbetrieh der Klimaanlage in einer Stellung, in weicher der Kaltluftkanal durch die Misch- und Verteilerklappe vollständig verschließbar ist, der durch den Defrostkanal strömenden Warmluft Kaltluft beigemischt wird. Durch die erfindungsgemäße Konfiguration kann trotz einer Kopplung der Luftverteilung und Temperatur (sogenanntes "Easy-to-use"-Konzept) die Klimaanlage im Defrostbetrieb (Scheibenentfrostung) auch bei Temperaturen unterhalb der maximalen Temperatur betrieben werden und es können für den Fahrzeuginsassen unangenehme Temperaturanstiege effektiv vermieden werden. Insbesondere bei erhöhten Außentemperaturen ist die Absenkung der Temperatur im Defrostbetrieb besonders wünschenswert. Das erfindungsgemäße Klimakonzept ermöglicht einen Defrostbetrieb mit kalter oder zumindest temperierter Luftströmung.

Vorzugsweise strömt in dem Warmluftkanal von einer Heizeinrichtung kommende Warmluft, in dem Kaltluftkanal strömt von einem Verdampfer kommende Kaltluft, in dem Belüftungskanal strömt aus Kaltluft und Warmluft gemischte, temperierte Luft zur Belüftung eines Fahrzeuginnenraums, in dem Fußraumkanal strömt aus Kaltluft und Warmluft gemischte, temperierte Luft zur Belüftung eines Fußraums des Fahrzeuginnenraums, und in dem Defrostkanal strömt Warmluft zum Entfrosten einer Windschutzscheibe, welche mit Kaltluft aus dem Kaltluftkanal mischbar ist.

Gemäß einer bevorzugten Ausführungsform ist der Defrostkanal direkt benachtbart zu dem Kaltluftkanal angeordnet. Durch diese Anordnung wird eine einfache Absenkung der Temperatur im Defrostbetrieb bzw. Defrost-Modus der Klimaanlage über eine direkte Verbindung zwischen Kaltweg bzw, Kaltluftkanal und Defrostkanal ermöglicht.

Gemäß noch einer bevorzugten Ausführungsform sind der Defrostkanal und der Kaltluftkanal verbunden. Hierdurch kann Kaltluft in den Defrostkanal eingeleitet werden, um die durch die Konfiguration der Klimaanlage bedingte maximale Temperatur der Warmluftzufur im Defrostbetrieb zu senken.

Erfindungsgemäß sind der Defrostkanal und der Kaltluftkanal über einen Überströmkanal oder Bypasskanal verbunden. Durch diese Konfiguration kann Kaltluft direkt in den Defrostkanal eingeleitet werden. Hierdurch wird lediglich die Temperatur zur Entfrostung beeinflusst, ohne dass eine Rückwirkung auf die Temperaturen für den Fußraum und die Belüftung verursacht wird.

Vorzugsweise ist der Überströmkanal in das Luftführungsgehäuse integriert. Diese Ausführungsform hat den Vorteil, dass keine Zusatzteile benötigt werden und somit eine kostenneutrale Umsetzung unter Verwendung der bisher bekannten Klimaanlagen mit gekoppelter Luftverteilung und Temperatur realisiert werden kann.

Erfindungsgemäß ist in dem Überströmkanal eine Verschlusseinrichtung vorgesehen, über welche der Strömungsquerschnitt des Überströmkanals regulierbar, insbesondere verschließbar ist. Hierdurch die Kaltluftmenge, die der in den Defrostkanal im Defrostbetrieb einströmenden Warmluft beigemischt wird, regelbar.

Vorzugsweise ist die Verschlusseinrichtung als bewegbare Klappe ausgebildet, deren Bewegung zum Schießen und Öffnen des Überströmkanals an eine Ansteuerung zur Drehung der Misch- und Verteilerklappe gekoppelt ist. Noch bevorzugter ist es, wenn die Kopplung derartig gestaltet ist, dass der Überströmkanal nur in der Stellung "Defrost" der Misch- und Verteilerklappe geöffnet ist. Alternativ ist die Verschlusseinrichtung bzw. die bewegbare Klappe unabhängig von der Drehung der Misch- und Verteilerklappe ansteuerbar, um den Überströmkanal zu öffnen oder zu schließen.

Alternativ können der Kaltluftkanal und der Defrostkanal über zumindest einen Zusatzkanal verbunden sein. Vorzugsweise ist in den Zusatzkanal ebenfalls ein Regelelement eingebaut, welches es ermöglicht, die Kaltluftmenge und die damit verbundene Temperaturabsenkung im Defrostbetrieb bzw. Defrost-Modus zu regulieren.

Gemäß noch einer weiteren bevorzugten Ausführungsform ist statt einem Überströmkanal im Gehäuse dieser in der Misch- und Verteilerklappe vorgesehen.

Vorzugsweise ist dabei die Misch- und Verteilerklappe im Wesentlichen zylindrisch aufgebaut und weist eine Zylindermantelfläche auf, in welcher ein Einzug vorgesehen ist, welcher als Überströmkanal wirkt. Die Luftmenge über diesen Überströmkanal kann dabei generell durch die geometrische Gestaltung wie z. B. die Form, die Breite, die Tiefe, etc. des Einzugs beeinflusst werden, wie auch durch die Position des Einzugs an der Zylindermantelfläche selbst. Der Vorteil dieser Ausführungsform ist, dass sich die Einstellung "Defrost" mit entsprechender Temperierung ohne zusätzliche Bauteile im Gehäuse realisieren lässt und somit sehr kostengünstig bzw. kostenneutral ist. Bei einem geeigneten Werkzeuskonzept für die Misch- und Verteilerklappe lässt sich der Einzug auch ohne zusätzliche Werkzeugkosten realisieren.

Gemäß noch einer weiteren bevorzugten Ausführungsform weist die Misch- und Verteilerklappe eine Öffnung auf, um im Defrostbetrieb bzw. Defrost-Modus der Klimaanlage Kaltluft von dem Kaltluftkanal der Warmluft aus dem Warmluftkanal in einem Innenraum bzw. Mischraum der Misch- und Verteilerklappe zuzuleiten. Im Gegensatz zu den Ausführungsformen, bei denen die Kaltluft, welche zur Absenkung der Defrost-Temperatur benötigt wird, immer über einen Überströmkanal direkt in den Defrostkanal eingeleitet wird, wird gemäß dieser Ausführungsform die Kaltluft an einer an einer geeigneten Stelle vorgesehenen Öffnung in einen Mischraum in der Misch- und Verteilerklappe eingeleitet, wodurch die Temperatur der Luft bereits im Mischraum sinkt. Die Menge der beigemischten Kaltluft wird unter anderem durch die Lage, Größe und Form der Öffnung vorgegeben. Vorteilhafterweise bleibt bei dieser Konfiguration die Luftverteilung zwischen Defrostkanal, Fußraumkanal und Belüftungskanal weitgehend unbeeinflusst. Durch die Luftmischung im Mischraum und die daraus resultierende Temperatumenkung sind bei dieser Ausführungsform alle von dem Mischraum versorgten Luftaustritte, d. h. sowohl die dem Defrostkanal, dem Fußraumkanal und die dem Belüftungskanal zugeführte Luft, wenn auch in unterschiedlichem Ausmaß, von dieser Temperatursenkung, betroffen. Mit einem geeigneten Werkzeugkonzept kann eine solche Öffnung ohne zusätzliche Werkzeugkosten realisiert werden, da auch hierbei keine Zusatzteile notwendig sind.

Dabei ist es auch bevorzugt, wenn die Öffnung mit einem den Öffnungsquerschnitt veränderbaren Regelelement versehen ist. Die Variierbarkeit des Öffnungsquerschnitts der Öffnung in der Misch- und Verteilerklappe ermöglicht es, die Kaltluftmenge kontrolliert einzubringen.

Noch bevorzugter ist die Regelung des Öffnungsquerschnitts durch das Regelelement mit der Ansteuerung zur Drehung der Misch- und Verteilerklappe gekoppelt. Eine bevorzugte Ausführungsform dieser Steuerung ist derartig realisiert, dass der Defrostbetrieb bzw. Defrost-Modus mit maximaler Temperatur als auch mit temperierter bzw. herabgesetzter Temperatur möglich ist. Dabei kann gemäß noch einer weiteren Ausführungsform das Regelelement in der Misch- und Verteilerklappe derartig ausgebildet sein, dass es in offenem Zustand den Warmweg bzw. den Warmluftkanal vollständig verschließt. In diesem Fall ist der Defrostbetrieb bzw. Defrost-Modus sowohl bei maximal kalten Temperaturen als auch bei maximal warmen Temperaturen betreibbar.

Erfindungsgemäß wird darüber hinaus eine Klimaanlage, insbesondere für ein Kraftfahrzeug, mit einem Luftführungsgehäuse bereitgestellt, in welchem eine Vielzahl von Luftkanälen ausgebildet ist, welche zumindest zwei zuführende Luftkanäle, welche einen Warmluftkanal, durch welche von einer Heizeinrichtung kommende Warmluft strömt, und einen Kaltluftkanal, durch welchen von einem Verdampfer kommende Kaltluft strömt, umfassen, und zumindest drei weiterführende Luftkanäle, welche einen Belüftungskanal, einen Fußraumkanal und einen Defrostkanal umfassen, aufweisen, wobei zur Regelung der Lufttemperatur und Luftverteilung der dem Fshrzeuginnenraum zuzuführenden Luft eine kombinierte Misch- und Verteilerklappe vorgesehen ist, welche derartig ausgebildet sind, dass sie in einer Stellung, in welcher der eine zuführende Luftkanal vollständig geöffnet ist, den jeweils anderen zuführenden Luftkanal verständig verschließt, wobei die Heizeinrichtung regelbar ist, um in einem Defrostmodus der Klimaanlage die Temperatur der über den Defrostkanal ausgegebenen Warmluft zu regeln, Diese Variante löst die Aufgabe im Gegensatz zu den obigen Ausführungsformen mit luftseitiger Temperaturregelung durch eine wasserseiteige Regelung der Temperatur. Hierbei wird zur Regelung der Temperatur eine Regelung der Leistungsabgabe der Heizeinrichtung und damit der Temperatur im Warmluftweg selbst durchgeführt.

Dies kann gemäß einer bevorzugten Ausführungsform durch Variation der Menge des die Heizeinrichtung durchströmenden heißen, flüssigen Mediums durch ein geeignetes Regelelement erreicht werden. Beispielsweise kann ein in die Heizeinrichtung eingebautes Regelventil in den Vor- oder Rücklauf der Heizeinrichtung hierzu eingesetzt werden.

In Elektro- oder Hybridfahrzeugen, in welchen möglicherweise keine von einem Medium durchströmte Heizeinrichtung mehr verwendet wird, sondern beispielsweise ein elektrischer Wärmeübertrager (z. B. PTC) eingesetzt wird, ist dagegen eine elektronische Regelung implementierbar.

Gemäß einer bevorzugten Ausführungsform ist die Ansteuerung des Regelelements mit der Ansteuerung der Misch- und Verteilerklappe in geeigneter Weise gekoppelt.

In einer weiteren bevorzugten Ausführungsform wird das Regelelement im Heizkreislauf auch in der Einstellung "Belüftung maximal kalt" geschlossen, damit die Resterwärmung, welche typischerweise bei luftseitigen Anlagen zwischen 1 bis 3 K liegt, vermieden wird. Dies ermöglicht wiederum eine energieeffiziente Kühlung.

Im Folgenden wird die Erfindung anhand von Ausführungsbeispielen unter Bezugnahme auf die Zeichnung detailliert erläutert. In der Zeichnung zeigen:
- Fig. 1: eine vereinfachte Schnittdarstellung eines Abschnitts einer Klimaan- lage im Bereich der Misch- und Verteilerklappe gemäß dem Stand der Technik;
- Fig. 2: eine schematische Darstellung des Regelzusammenhangs zwischen der Luftverteilung auf die einzelnen Luftkanäle zu den Austritten bzw. der Temperatur und der Stellung des Bedienelements bei der in Fig. 1 dargestellten Misch- und Verteilerklappe;
- Fig. 3: eine vereinfachte Schnittdarstellung eines Abschnitts einer Klimaan- lage im Bereich der Misch- und Verteilerklappe gemäß einer Ausfüh- rungsform;
- Fig. 4: eine schematische Darstellung des Regelzusammenhangs zwischen der Luftverteilung auf die einzelnen Luftkanäle zu den Luftaustritten bzw. der Temperatur und der Stellung des Bedienelements bei der in Fig. 3 dargestellten Misch- und Verteilerklappe;
- Fig. 5: eine vereinfachte Schnittdarstellung eines Abschnitts einer Klimaan- lage gemäß dem Stand der Technik;
- Fig. 6: eine vereinfachte Schnittdarstellung eines Abschnitts einer Klimaan- lage gemäß einer Ausführugsform;
- Fig. 7: eine schematische Darstellung des Regelzusammenhangs zwischen der Luftverteilung auf die einzelnen Luftkanäle zu den Luftaustritten bzw. der Temperatur und der Stellung des Bedienelements bei der in Fig. 6 dargestellten Misch- und Verteilerklappe;
- Fig. 8: eine vereinfachte Schnittdarstellung eines Abschnitts einer Klimaan- lage gemäß einer weiteren Ausführungsform;
- Fig. 9: eine perspektivische Ansicht einer Klimaanlage gemäß noch einer weiteren Ausführungsform;
- Fig. 10: eine perspektivische Ansicht einer Misch- und Verteilerklappe ge- mäß dem Stand der Technik;
- Fig. 11: eine perspektivische Ansicht einer Misch- und Verteilerklappe ge- mäß einer Ausführungsform;
- Fig. 12: eine vereinfachte Schnittdarstellung eines Abschnitts einer Klimaan- lage mit der in Fig. 11 dargestellten Misch- und Verteilerklappe in ei- ner Stellung "Defrost maximal warm";
- Fig. 13: eine vereinfachte schnittdarstellung eines Abschnitts der in Fig. 12 dargestellten Klimaanlage mit der Misch- und Verteilerklappe in einer Stellung "Defrost temperiert";
- Fig. 14: eine perspektivische Ansicht einer Klimaanlage gemäß einer weite- ren Ausführungsform;
- Fig. 15: eine schematische Darstellung des Regelzusammenhangs zwischen der Luftverteilung auf die einzelnen Luftkanäle zu den Luftaustritten bzw. der Temperatur und der Stellung des Bedienelements bei der in Fig. 14 dargestellten Misch- und Verteilerklappe; und
- Fig. 16: eine perspektivische Ansicht einer Klimaanlage gemäß noch einer weiteren Ausführungsform.

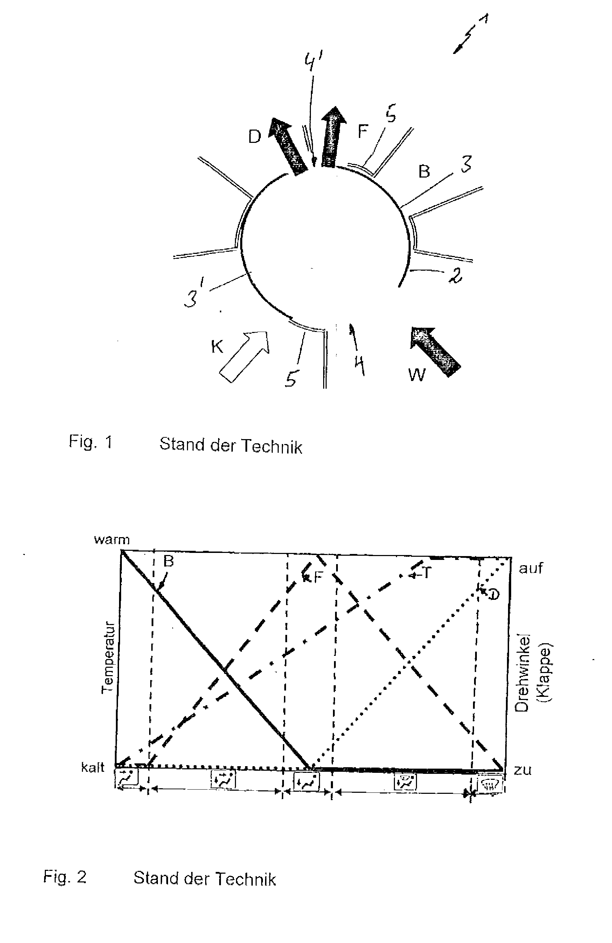

Fig.1 zeigt eine vereinfachte Schnittdarstellung eines Abschnitts einer Klimaanlage 1 im Bereich der Misch- und Verteilerklappe 2 gemäß dem Stand der Technik. Schematisch dargestellt ist in Fig. 1 darüber hinaus auch die Anordnung der fünf Luftkanäle, wobei der Warmluftkanal W und der Kaltluftkanal K im Folgenden als zuführende Luftkanäle und der Defrostkanal D, der Fußraumkanal F und der Belüftungskanal B als weiterleitende Luftkanäle bezeichnet werden. In dem Warmluftkanal strömt warme, von einer Heizeinrichtung (nicht dargestellt) kommende Luft und in dem Kaltluftkanal strömt kalte, von einem Verdampfer (nicht dargestellt) über einen Bypass an der Heizeinrichtung vorbei geleitete kalte Luft. Der Belüftungskanal B dient darüber hinaus zur Weiterleitung von gemischter, temperierter Luft zur Belüftung des Fahrzeuginnenraums, der Fußraumkanal F dient zur Weiterleitung von gemischter, temperierter Luft zum Fußraum und der Defrostkanal dient zur Weiterleitung der warmen Luft zum Entfrosten der Windschutzscheibe eines Kraftfahrzeugs. Die in Fig. 1 dargestellte Stellung der Misch- und Verteilerklappe 2 entspricht einer Einstellung, in welcher 50 % der Warmluft aus dem Warmluftkanal W in den Fußraumkanal und 50 % in den Defrostkanal geleitet werden.

Die Misch- und Verteilerklappe 2 weist zwei äußere Klappenflächen 3, 3' auf, welche in Form von Teilbereiches eines Zylinders ausgebildet sind, wobei von dem Warmluftkanal W kommende Luft und/oder von dem Kaltluftkanal K kommende Luft zu einem oder mehreren der weiterleitenden Luftkanäle durch die Öffnungen 4 und 4' durch die Misch- und Verteilerklappe 2 hindurch geleitet werden kann. Die Misch- und Verteilerklappe 2 weist darüber hinaus eine Abdeckung 5 im Bereich des Fußraumkanals F auf, was bewirkt, dass die Luft erst verspätet in den Fußraumkanal F eintritt (siehe waagerechter Verkauf der gestrichelten und durch F gekennzeichneten Linie links in Fig. 2). Weiterhin weist die Misch- und Verteilerklappe 2 im Bereich der Austrittsöffnung des Kaltluftkanals K eine weitere Abdeckung 5 auf, weiche sich dadurch bemerkbar macht, dass die maximale Temperatur früher erreicht wird, das heißt, dass bereits im Zustand 50 % Belüftung und 50 % Defrost die maximale Temperatur T erreicht wird, welche bis zum Betriebszustand 100 % Defrost beibehalten wird, wie aus Fig. 2 ersichtlich ist (waagerechter Verlauf der punktgestrichelten und durch T gekennzeichneten Temperaturkurve im rechten Teil von Fig. 2).

Fig. 2 ist eine schematische Darstellung des Regelzusammenhangs zwischen der Luftverteilung auf die einzelnen Luftkanäle zu den Austritten bzw. der Temperatur und der Stellung des Bedienelements bei der in Fig. 1 dargestellten Misch- und Verteilerklappe 2. Die durch B, F und D gekennzeichneten Kurven stellen die Luftmenge dar, die beim Betätigen, beispielsweise beim Drehen, eines Bedienelements (nicht dargestellt) dem Fahrzeuginnenraum zugeführt wird. An der linken Seite des Diagramms befindet sich das Bedienelement dabei in einer Stellung, die "100 % Belüftung" entspricht, wobei die Temperatur minimal ist und wobei beim weiteren Drehen des Bedienelements in Richtung zu einer Stellung "100 % Fußraum" (Mitte des Diagramms) die Luftmenge, welche über den Belüftungskanal B zugeführt wird kontinuierlich abnimmt und gleichzeitig die Luftmenge, welche über den Fußraumkanal F zugeführt wird, kontinuierlich zunimmt bis zur Stellung "100 % Fußraum", in welcher ausschließlich Luft über den Fußraumkanal F zugeführt wird. Bei weiterer Drehung des Bedienelements zu einer Stellung "Defrost" nimmt die Luftmenge über den Fußraumkanal F dabei ab, gleichzeitig nimmt die über den Defrostkanal D geleitete Luftmenge zu, bis bei der Stellung "100 % Defrost" (rechts in dem Diagramm von Fig. 2) ausschließlich Luft über den Defrostkanal D weitergeleitet wird. Wie anhand der ebenfalls in dem Diagramm eingezeichneten Temperaturkurve T erkannt werden kann, steigt die Temperatur von der Stellung "100 % Belüftung" bis zu einer Stellung "50 % Fußraum / 50 % Defrost" kontinuierlich bis zur maximal möglichen Temperatur an, so dass über den gesamten Bereich "Defrost" der Windschutzscheibe des Kraftfahrzeugs bzw. dem Fahrzeuginnenraum Luft mit maximaler Temperatur zugeführt wird, was - wie oben bereits beschrieben wurde - für die Fahrzeuginsassen beispielsweise bei bereits erhöhten Außentemperaturen unangenehm sein kann.

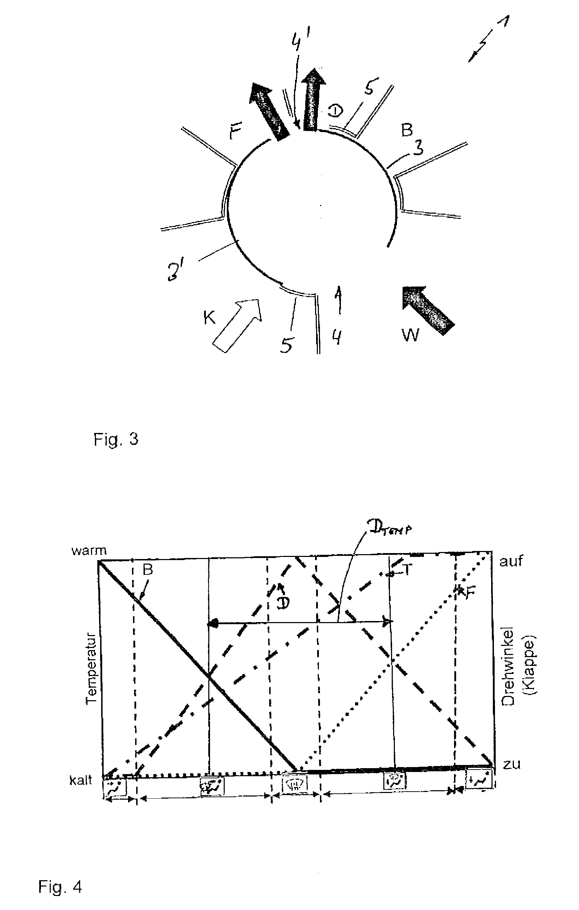

Fig. 3 zeigt eine vereinfachte Schnittdarstellung eines Abschnitts einer Klimaanlage 1 im Bereich der Misch- und Verteilerklappe 2 gemäß einer Ausführungsform. Die Misch- und Verteilerklappe 2 selbst ist im Wesentlichen wie die bereits im Zusammenhang mit Figur 1 beschriebene Misch- und Verteilerklappe 2 aufgebaut, jedoch weicht die geometrische Anordnung der drei weiterleitenden Luftkanäle, nämlich des Fußraumkanals F, des Defrostkanals D und des Belüftungskanals B von der in Fig. 1 gezeigten Anordnung ab, da in dieser Ausführungsform der Defrostkanal D in der Mitte zwischen dem Fußraumkanal F und dem Belüftungskanal B liegt.

Fig. 4 zeigt eine schematische Darstellung des Regelzusammenhangs zwischen der Luftverteilung auf die einzelnen Luftkanäle zu den Luftaustritten bzw. der Temperatur und der Stellung des Bedienelements bei der in Fig. 3 dargestellten Misch- und Verteilerklappe 2. Im Gegensatz zu der Konfiguration des Standes der Technik ist im Defrostbetrieb eine Temperaturregelung der zugeführten Luft über den durch den Doppelpfeil D_{TEMP} gekennzeichneten Bereich möglich, welche Temperaturen unterhalb der maximalen Temperatur ermöglicht (siehe Mitte des Diagramms von Fig. 4, wo bei der Stellung des Bedienelements auf "100 % Defrost" eine Temperatur des Luftstroms deutlich unterhalb der maximal möglichen Temperatur liegt). Auch im Gegensatz zu der aus dem Stand der Technik bekannten Konfiguration, kann gemäß dem Ausführungsbeispiel die Fußraumbelüftung mit der maximalen Temperatur stattfinden.

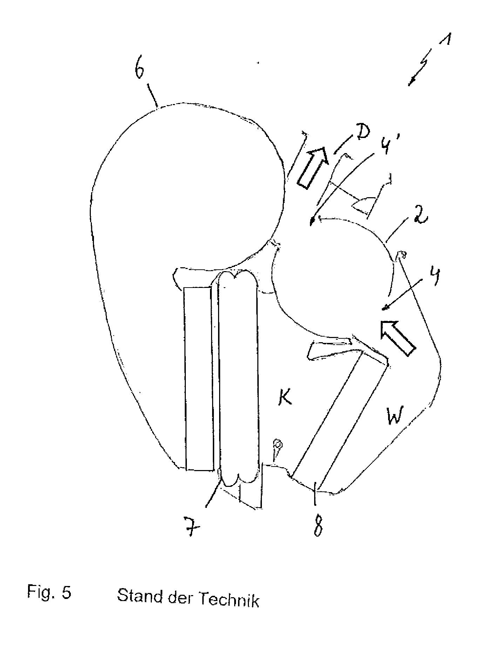

Fig. 5 zeigt eine vereinfachte Schnittdarstellung eines Abschnitts einer Klimaanlage 1 gemäß dem Stand der Technik. Die Klimaanlage 1 weist ein Gebläse 6, einen Verdampfer 7 und eine Heizeinrichtung 8 auf. Von dem Verdampfer 7 kommende Luft bildet in dem Kaltluftkanal K einen Kaltluftstrom, und durch die Heizeinrichtung 8 hindurch geleitete Luft bildet in dem Warmluftkanal W einen Warmluftstrom. In der hier dargestellten Anordnung befindet sich die Klimaanlage 1 in einem Defrostmodus, in welcher das Bedienelement (nicht dargestellt) auf "100 % Defrost" eingestellt ist. Dabei ist die Misch- und Verteilerklappe 2 in eine Stellung gedreht, in welcher die Öffnung 4 einen Eintritt der Warmluft in die Misch- und Verteilerklappe 2 ermöglicht, und die Öffnung 4'einen Austritt der Warmluft an dem Defrostkanal D ermöglicht. Der Kaltluftkanal K wird durch die Misch- und Verteilerklappe 2 in dieser Stellung vollständig verschlossen, so dass im Defrostbetrieb ausschließlich Warmluft mit maximaler Temperatur der Windschutzscheibe bzw. dem Fahrzeuginnenraum zugeführt wird.

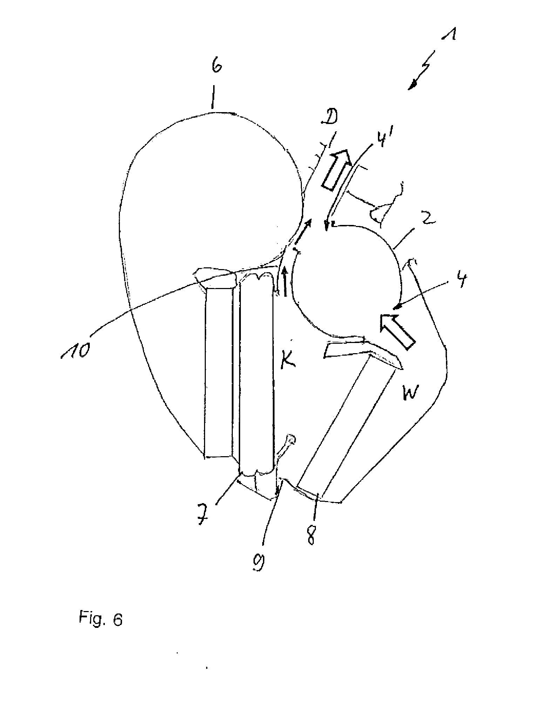

Fig. 6 zeigt eine vereinfachte Schnittdarstellung eines Abschnitts einer Klimaanlage 1 gemäß einer Ausführungsform. Um auch im Defrostbetrieb eine Luftzufuhr mit geringeren Temperaturen als die maximale Temperatur durch ausschließliches Zuführen von Warmluft zu ermöglichen, wird gemäß der Ausführungsform ein in dem Luftführungsgehäuse 9 der Klimaanlage 1 integrierter Überströmkanal 10 bzw. Bypasskanal vorgesehen, welcher den Kaltluftkanal K und den Defrostkanal D verbindet, so dass auch im Defrostbetrieb, in welcher sich die Misch- und Verteilerklappe 2 in einer Stellung befindet, um durch die Öffnung 4 lediglich durch den Warmluftkanal W geleitete Warmluft dem Defrostkanal D zuzuführen, eine Mischung dieser Warmluft mit Kaltluft in dem Defrostkanal D stattfinden kann, um die Temperatur des Luftstroms abzusenken.

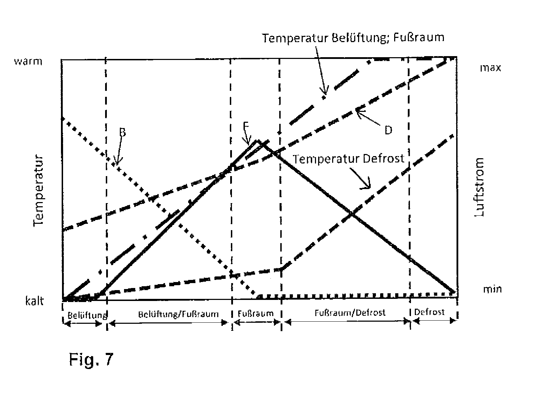

Fig. 7 zeigt eine schematische Darstellung des Regelzusammenhangs zwischen der Luftverteilung auf die einzelnen Luftkanäle zu den Luftaustritten bzw. der Temperatur und der Stellung des Bedienelements bei der in Fig. 6 dargestellten Misch- und Verteilerklappe 2. Die durch B, F und D gekennzeichneten Kurven stellen wiederum die Luftmenge dar, die beim Betätigen des Bedienelements (nicht dargestellt) dem Fahrzeuginnenraum durch den Belüftungskanal B, den Fußraumkanal F oder den Defrostkanal D zugeführt wird. Darüber hinaus ist durch die punktgestrichelte Kurve der Temperaturverlauf für die dem Belüftungskanal und dem Fußraumkanal zugeführte Luft dargestellt und die untere gestrichelte Linie kennzeichnet den Temperaturverlauf der dem Defrostkanal zugeführten Luft.

Wie im Zusammenhang mit Fig. 2 bereits ausgeführt, befindet sich an der linken Seite des Diagramms das Bedienelement in einer Stellung, die" 100 % Belüftung" entspricht, wobei die Temperatur der dem Defrostkanal D zugeführten Luft minimal. Beim Drehen des Bedienelements in Richtung zu einer Stellung "100 % Fußraum" (Mitte des Diagramms) steigt die Temperatur der dem Defrostkanal D zugeführten Luft leicht an und steigt dann bei noch weiterem Drehen in Richtung zu einer Stellung "100 % Defrost" mit einer steileren Steigung weiter an. Jedoch wird bei der Stellung "100 % Defrost" die maximal mögliche Temperatur nicht erreicht. Auch ist erkennbar, dass die Temperatur in dem Defrostbereich nicht einer konstanten (maximal hohen) Temperatur entspricht, sondern von einer niedrigen Temperatur auf eine höhere Temperatur und umgekehrt einstellbar ist. Wie aus dem Diagramm erkennbar ist, wird bei dieser Ausführungsform nur die Temperatur der dem Defrostkanal D zugeführten Luft beeinflusst. Die Temperatur der dem Fußraumkanal F und dem Belüftungskanal B zugeführten Luft wird dagegen gar nicht beeinflusst (vgl. Fig. 2). Wie jedoch auch im Vergleich mit Fig. 2 erkennbar ist, unterscheidet sich neben dem Temperaturverlauf der dem Defrostkanal D zugeführten Luft auch die Luftverteilung der an den Defrostkanal D, den Belüftungskanal B und den Fußraurnkanal F zugeführten Luftströme.

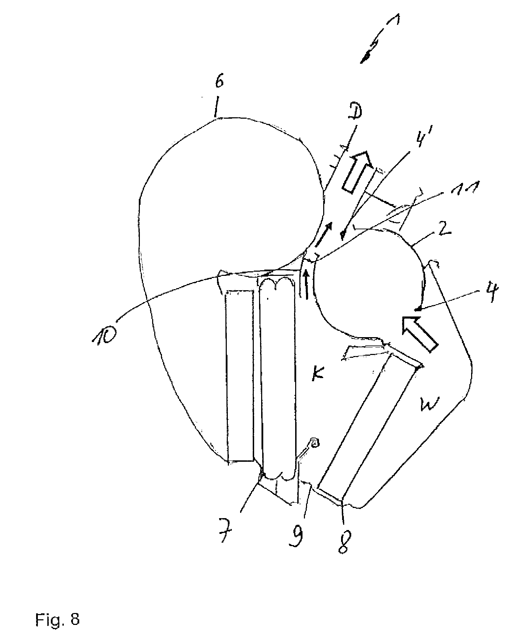

Fig. 8 zeigt eine vereinfachte Schnittdarstellung eines Abschnitts einer Klimaanlage 1 gemäß einer weiteren Ausführungsform, in welcher in dem Überströmkanal 10 eine Verschlusseinrichtung 11 vorgesehen ist, über welche der Strömungsquerechnitt des Überströmkanals 10 regulierbar ist. Die Verschiussehrichtung 11 ist hier als bewegbare Klappe ausgebildet ist, deren Bewegung zum Schließen und Öffnen des Überströmkanals 10 an eine Ansteuerung zur Drehung der Misch- und Verteilerklappe 2 gekoppelt ist. Durch die Verschlusseinrichtung 11 kann der Überströmkanal 10 vollständig verschlossen werden, so dass die maximale Temperatur im Defrostbetrieb erreicht werden kann.

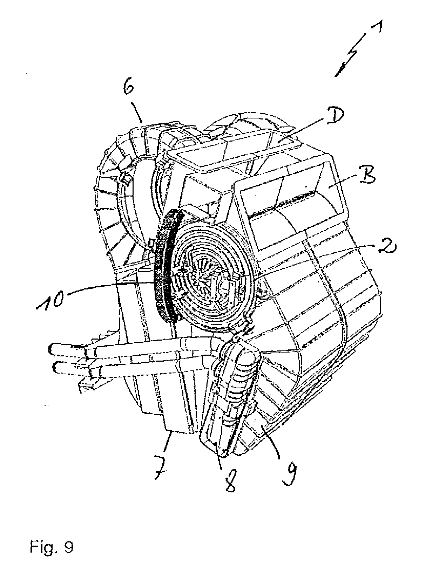

Fig. 9 zeigt eine perspektivische Ansicht einer Klimaanlage 1 gemäß noch einer weiteren Ausführungsform. Die hier gezeigte Austührungsform unterschiedet sich von der in Figuren 6 und 8 gezeigten Ausführungsform dadurch, dass der Überströmkanal 10 nicht in das Luftführungsgehäuse 9 der Klimaanlage 1 integriert ist, sondern als Zusatzkanal daran angebracht ist. Auch in diesen Überströmkanal 10 in Form eines Zusatzkanals kann nach Bedarf ein Regelelement eingebaut sein, welches es ermöglicht die Kaltluftmenge und damit die Temperaturabsenkung im Defrostbetrieb zu regulieren.

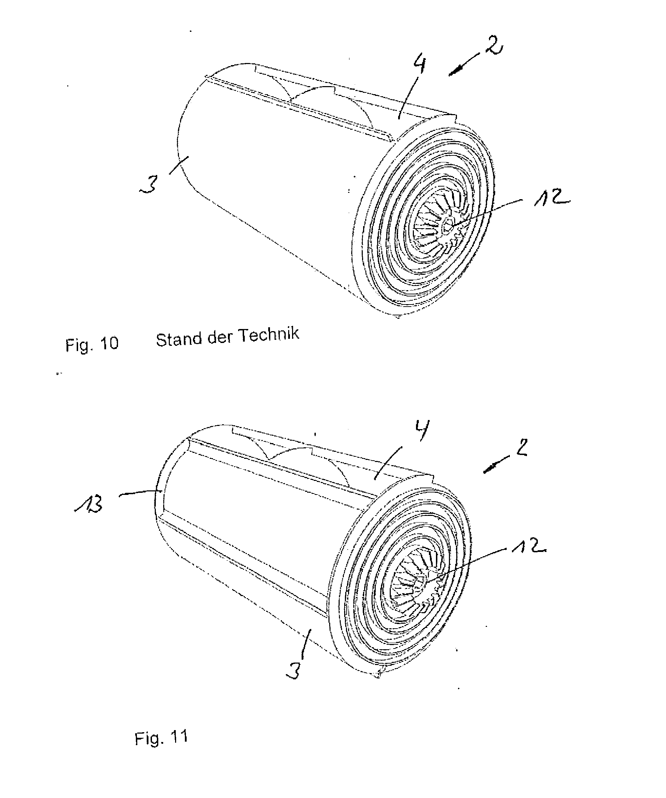

Fig. 10 ist eine perspektivische Ansicht einer Misch- und Verteilerklappe 2 gemäß dem Stand der Technik. Es ist erkennbar, dass die äußere Klappenfläche 3 in Form von Teilbereichen eines Zylinders ausgeblidet ist. Auch ist die Öffnung 4 erkennbar. Die Misch- und Verteilerklappe 2 ist darüber hinaus um die Achse 12 herum drehbar.

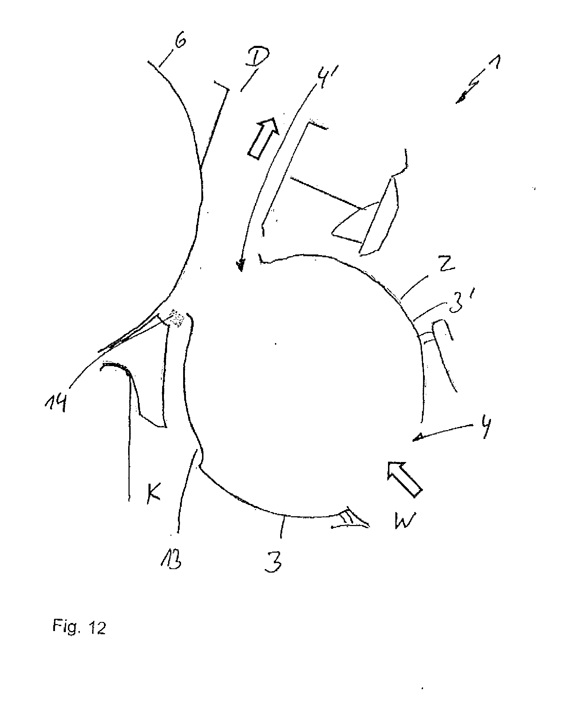

Fig. 11 ist eine perspektivische Ansicht einer Misch- und Verteilerklappe 2 gemäß einer Ausführungsform, wobei in der äußeren Klappenfläche 3 bzw. in der Zylindermantelfläche der Misch- und Verteilerklappe 2 ein Einzug 13 ausgebildet ist, der als Überströmkanal für die aus dem Kaltluftkanal K kommende Kaltluft im Defrostbetrieb der Klimaanlage 1 wirkt, wie im Zusammenhang mit Figur 12 noch weiter beschrieben werden wird. Die über diesen Überströmkanal 10 strömende Luftmenge kann generell durch die geometrische Gestaltung wie auch durch die Position des Einzugs 13 am Umfang der Misch- und Verteilerklappe 2 beeinflusst werden.

Fig. 12 ist eine vereinfachte Schnittdarstellung eines Abschnitts einer Klimaanlage 1 mit der in Fig. 11 dargestellten Misch- und \/erteilerklappe 2 in einer Stellung "Defrost maximal warm". Dabei strömt Warmluft aus dem Warmluftkanal W durch die Öffnungen 4, 4' der Misch- und Verteilerklappe 2 hindurch zum Defrostkanal D. Der an der Misch- und Verteilerklappe 2 vorgesehene Einzug 13 ermöglicht ein zusätzliches Eintreten von von dem Kaltluftkanal K kommender Kaltluft, was hier jedoch durch ein Regelelement 14 verhindert wird. Ist das Regelelement 14 nicht vorgesehen, so könnte bereits in dieser Stellung der Misch- und Verteilerklappe 2 dem Defrostkanal D Kaltluft im Defrostbetrieb beigemischt werden.

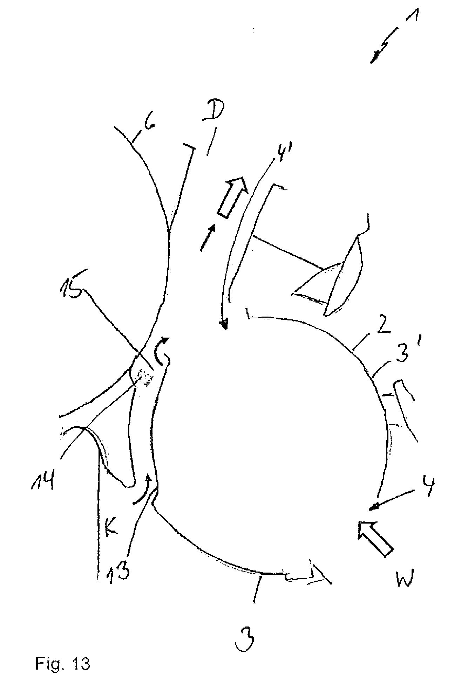

Fig. 13 zeigt eine vereinfachte Schnittdarstellung eines Abschnitts der in Fig. 12 dargestellten Klimaanlage 1, wobei sich die Misch- und Verteilerklappe 2 in einer Stellung "Defrost temperiert" befindet. Durch Drehung der Misch- und Verteilerklappe 2 um die Achse (nicht dargestellt) herum, gibt der Einzug 13 eine Öffnung 15 frei, durch die aus dem Kaltluftkanal K kommende Kaltluft der aus dem Warmluftkanal W kommenden Warmluft im Defrostkanal D beigemischt werden kann.

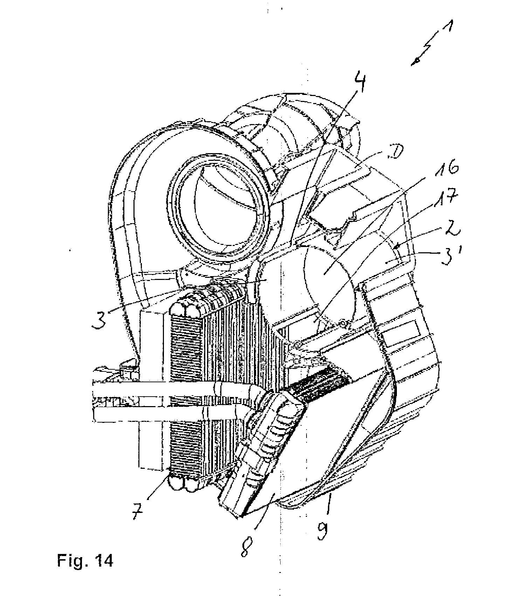

Fig. 14 zeigt eine perspektivische Ansicht einer Klimaanlage 1 gemäß, einer weiteren Ausführungsform. In dieser Ausführungsform wird die von dem Kaltluftkanal K kommende Kaltluft in einen Mischraum eingeleitet, der sich hier in einem Innenraum 16 der Misch- und Verteilerklappe 2 befindet. Hierzu weist die Misch- und Verteilerklappe 2 zusätzlich zu den Öffnungen 4, 4' eine weitere Öffnung 17 auf, durch welche Kaltluft, wenn sich die Misch- und Verteilerklappe 2 in einer dem Defrostbetrieb entsprechenden Stellung befindet, in den Innenraum 16 eintritt und sich dort mit von dem Warmluftkanal W kommenden Warmluft mischt. Die Menge der beigemischten Kaltluft ist in dieser Ausführungsform von der Lage, Größe und Form der Öffnung 17 abhängig.

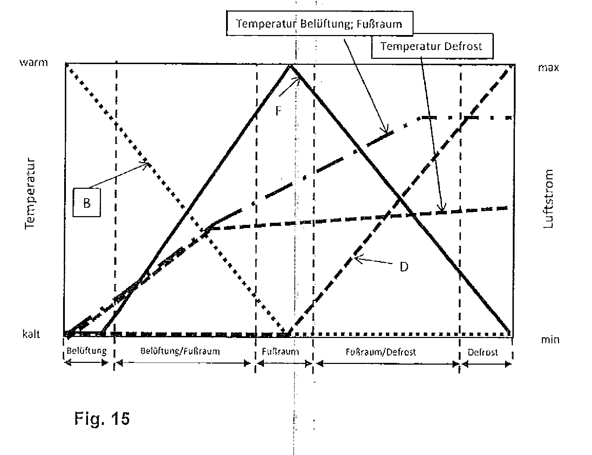

Fig. 15 zeigt eine weitere schematische Darstellung des Regelzusammenhangs zwischen der Luftverteilung auf die einzelnen Luftkanäle zu den Luftaustritten bzw. der Temperatur und der Stellung des Bedienelements bei der in Fig. 14 dargestellten Misch- und Verteilerklappe 2, welche die Öffnung 17 aufweist. Die durch B, F und D gekennzeichneten Kurven stellen wiederum die Luftmenge dar, die beim Betätigen des Bedienelements (nicht dargestellt) dem Fahrzeuginnenraum durch den Belüftungskanal B, den Fußraumkanal F oder den Defrostkanal D zugeführt wird. Wie erkennbar ist, bleibt die Luftverteilung auf die einzelnen Kanäle in dieser Ausführungsform weitgehend unbeeinflusst (vgl. Fig. 2).

Weiterhin wird durch die punktgestrichelte Kurve der Temperaturverlauf für die dem Belüftungskanal B und dem Fußraumkanal F zugeführte Luft dargestellt, welche im Gegensatz zu der in Fig. 6 und Fig. 7 dargestellten Ausführungsform in der "Defrost" und "Fußraum-/Defrost" Stellung des Bedienelements nicht maximal erwämbar ist. Auch der Temperaturverlauf der dem Defrostkanal D zugeführten Luft, welchen die untere gestrichelte Linie kennzeichnet, unterscheidet sich deutlich von dem Temperaturverlauf, welcher durch die in Fig. 6 dargestellte Ausführungsform realisiert wird, Vor allem in einer Stellung des Bedienelements auf "Belüftung" und "Belüftung/Fußraum" steigt im Gegensatz zu der in Fig. 7 gezeigten Temperaturkurve die Temperatur hier zunächst relativ stark und kontinuierlich an, wie es bei der in Fig. 2 dargestellten Ausführungsform gemäß dem Stand der Technik auch der Fall ist. Dann jedoch, kurz bevor das Bedienelement die Stellung "Fußtaum" erreicht, knickt die Temperaturkurve ab und die Temperatur steigt nur noch sehr leicht bis zur Stellung des Bedieneiements auf "Defrost" an, wobei in der Stellung des Bedienelements auf "Defrost" nur etwa die halbe Temperatur der maximal möglichen Temperatur erreichbar ist.

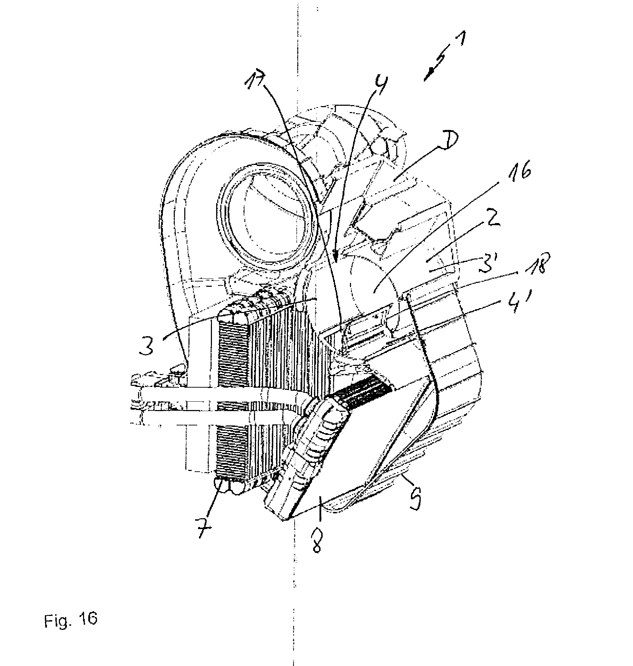

Fig. 16 ist eine perspektivische Ansicht einer Klimaanlage 1 gemäß noch einer weiteren Ausführungsform, welche im Wesentlichen der in Figur 14 dargestellten Ausführungsform entspricht, jedoch mit dem Unterschied, dass die Öffnung 17 hier mit einem Regelelement 18, welches in Form einer Klappe ausgebildet ist, welche die Öffnung 17 verschließen und freigeben kann. Hierdurch kann die Kaltluftmenge kontrolliert in den Mischraum im Innenraum 16 der Misch- und Verteilerklappe 2 eingebracht werden. Das Regelelement 18 kann darüber hinaus in geeigneter Weise mit der Ansteuerung bzw. der Drehung der Misch- und Verteilerklappe 2 gekoppelt sein. Die Steuerung kann dabei derartig realisiert sein, dass sowohl ein temperierter Defrostbetrieb als auch ein Defrostbetrieb mit maximaler Temperatur des Luftstroms möglich ist. Gemäß einer weiteren möglichen Ausführungsform kann das Regelelement 18 derartig ausgebildet sein, dass es im offenen Zustand den Warmweg vollständig verschießt, so dass sowohl ein temperierter Defrostbetrieb als auch ein maximal kalter und ein maximal warmer Defrostbetrieb ermöglicht wird.

Insgesamt betrachtet kann mit der erfindungsgemäßen Klimaanlage 1 auf konstruktiv einfache, jedoch effektive Art und Weise die Temperatur des Luftstroms im Defrostbetrieb geregelt werden, so dass auch im Defrostbetrieb für die Insassen des Kraftfahrzeugs eine angenehme Temperatur im Fahrzeuginnenraum vorgesehen werden kann.

### Bezugszeichenliste

- 1: Klimaanlage
- 2: Misch- und Verteilerklappe
- 3, 3': Klappenflächen
- 4, 4': Öffnung
- 5: Abdeckung
- 6: Gebläse
- 7: Verdampfer
- 8: Heizeinrichtung
- 9: Luftführungsgehäuse
- 10: Überströmkanal
- 11: Verschlussehnchtung
- 12: Achse
- 13: Einzug
- 14: Regelelement
- 15: Öffnung
- 16: Innenraum
- 17: Öffnung
- 18: Regelelement

## Patentansprüche

1. Klimaanlage (1), insbesondere für ein Kraftfahrzeug, mit einem Luftführungsgehäuse (9), in welchem eine Vielzahl von Luftkanälen ausgebildet ist, welche zumindest zwei zuführende Luftkanäle, welche einen Warmluftkanal (W) und einen Kaltluftkanal (K) umfassen, und zumindest drei weiterführende Luftkanäle aufweisen, welche einen Belüftungskanal (B), einen Fußraumkanal (F) und einen Defrostkanal (D) umfassen, wobei zur Regelung der Lufttemperatur und Luftverteilung der einem Fahrzeuginnenraum zuzuführenden Luft eine kombinierte Misch- und Verteilerklappe (2) vorgesehen ist, welche derartig ausgebildet ist, dass sie in einer Stellung, in welcher der eine zuführende Luftkanal (W, K) vollständig geöffnet ist, den jeweils anderen zuführenden Luftkanal (K, W) vollständig verschließt, **dadurch gekennzeichnet, dass** in einem Defrostbetrieb der Klimaanlage in einer Stellung, in welcher der Kaltluftkanal (K) durch die Misch- und Verteilerklappe (2) vollständig verschlossen ist, der durch den Defrostkanal (D) strömenden Warmluft Kaltluft beigemischt wird, wobei der Defrostkanal (D) und der Kaltluftkanal (K) über einen Überströmkanal (10) verbunden sind und in dem Überströmkanal (10) eine Verschlusseinrichtung (11) vorgesehen ist, über welche der Strömungsquerschnitt des Überströmkanals (10) regulierbar, insbesondere verschließbar ist.

2. Klimaanlage (1) nach Anspruch 1, **dadurch gekennzeichnet, dass** in dem Warmluftkanal (W) von einer Heizeinrichtung (8) kommende Warmluft strömt, in dem Kaltluftkanal (K) von einem Verdampfer (7) kommende Kaltluft strömt, in dem Belüftungskanal (B) aus Kaltluft und Warmluft gemischte, temperierte Luft zur Belüftung des Fahrzeuginnenraums strömt, in dem Fußraumkanal (F) aus Kaltluft und Warmluft gemischte, temperierte Luft zur Belüftung eines Fußraums des Fahrzeuginnenraums strömt, und in dem Defrostkanal (D) Warmluft zum Entfrosten einer Windschutzscheibe strömt, welche mit Kaltluft aus dem Kaltluftkanal (K) mischbar ist.

3. Klimaanlage (1) nach Anspruch 1 oder 2, **dadurch gekennzeichnet, dass** der Defrostkanal (D) benachbart zu dem Kaltluftkanal (K) angeordnet ist.

4. Klimaanlage (1) nach einem oder mehreren der Ansprüche 1 bis 3, **dadurch gekennzeichnet, dass** der Defrostkanal (D) und der Kaltluftkanal (K) verbunden sind.

5. Klimaanlage (1) nach Anspruch 1 bis 4, **dadurch gekennzeichnet, dass** der Überströmkanal (10) in das Luftführungsgehäuse (9) integriert ist.

6. Klimaanlage (1) nach Anspruch 1 bis 5, **dadurch gekennzeichnet, dass** die Verschlusseinrichtung (11) als bewegbare Klappe ausgebildet ist, deren Bewegung zum Schließen und Öffnen des Überströmkanals (10) an eine Ansteuerung zur Drehung der Misch- und Verteilerklappe (2) gekoppelt ist.

7. Klimaanlage (1) nach einem oder mehreren der Ansprüche 1 bis 4, **dadurch gekennzeichnet, dass** der Kaltluftkanal (K) und der Defrostkanal (D) über zumindest einen Zusatzkanal verbunden sind.

8. Klimaanlage (1) nach einem oder mehreren der Ansprüche 1 bis 4, **dadurch gekennzeichnet, dass** in der Misch- und Verteilerklappe (2) ein Überströmkanal (10) zum Vorsehen einer Verbindung zwischen dem Kaltluftkanal (K) und dem Defrostkanal (D) ausgebildet ist.

9. Klimaanlage (1) nach einem oder mehreren der Ansprüche 1 bis 8, **dadurch gekennzeichnet, dass** die Misch- und Verteilerklappe (2) im Wesentlichen zylindrisch aufgebaut ist und eine Zylindermantelfläche aufweist, in welcher ein Einzug (13) vorgesehen ist, welcher als Überströmkanal (10) wirkt.

10. Klimaanlage (1) nach einem oder mehreren der Ansprüche 1 bis 4, **dadurch gekennzeichnet, dass** die Misch- und Verteilerklappe (2) eine Öffnung (17) aufweist, um im Defrostbetrieb der Klimaanlage Kaltluft von dem Kaltluftkanal (K) der Warmluft von dem Warmluftkanal (W) in einem Innenraum (16) der Misch- und Verteilerklappe (2) zuzuleiten.

11. Klimaanlage (1) nach Anspruch 10, **dadurch gekennzeichnet, dass** die Öffnung (17) mit einem den Öffnungsquerschnitt veränderbaren Regelelement (18) versehen ist.

12. Klimaanlage (1) nach Anspruch 11, **dadurch gekennzeichnet, dass** die Regelung des Öffnungsquerschnitts durch das Regelelement (18) mit der Ansteuerung zur Drehung der Misch- und Verteilerklappe (2) gekoppelt ist.

13. Klimaanlage (1), insbesondere für ein Kraftfahrzeug, mit einem Luftführungsgehäuse (9), in welchem eine Vielzahl von Luftkanälen ausgebildet ist, welche zumindest zwei zuführende Luftkanäle, welche einen Warmluftkanal (W), durch welche von einer Heizeinrichtung (8) kommende Warmluft strömt, und einen Kaltluftkanal (K) aufweisen, durch welchen von einem Verdampfer (7) kommende Kaltluft strömt, und zumindest drei weiterführende Luftkanäle aufweisen, welche einen Belüftungskanal (B), einen Fußraumkanal (F) und einen Defrostkanal (D) umfassen, aufweisen, wobei zur Regelung der Lufttemperatur und Luftverteilung der einem Fahrzeuginnenraum zuzuführenden Luft eine kombinierte Misch- und Verteilerklappe (2) vorgesehen ist, welche derartig ausgebildet sind, dass sie in einer Stellung, in welcher der eine zuführende Luftkanal (W, K) vollständig geöffnet ist, den jeweils anderen zuführenden Luftkanal (K, W) vollständig verschließt, **dadurch gekennzeichnet, dass** die Heizeinrichtung (8) regelbar ist, um in einem Defrostbetrieb der Klimaanlage (1) die Temperatur der über den Defrostkanal (D) ausgegebenen Warmluft zu regeln wobei der Defrostkanal (D) und der Kaltluftkanal (K) über einen Überströmkanal (10) verbunden sind und in dem Überströmkanal (10) eine Verschlusseinrichtung (11) vorgesehen ist, über welche der Strömungsquerschnitt des Überströmkanals (10) regulierbar, insbesondere verschließbar ist.

## Claims

1. An air conditioning device (1), in particular for a motor vehicle, comprising an air conduction housing (9), in which a plurality of air ducts are provided, which include at least two supply air ducts, comprising a warm air duct (W) and a cold air duct (K), and at least three further air ducts, comprising a ventilation duct (B), a footwell duct (F) and a defrost duct (D), wherein a combined mixing and distribution flap (2) is provided so as to regulate the air temperature and air distribution of the air to be supplied to a vehicle interior, the flap being designed so that, in a position in which the one supply air duct (W, K) is completely open, the flap completely closes the respective other supply air duct (K, W), **characterized in that**, during defrost operation of the air conditioning device, cold air is admixed to the warm air flowing through the defrost duct (D) in a position in which the cold air duct (K) is completely closed by the mixing and distribution flap (2), wherein the defrost duct (D) and the cold air duct (K) are connected by way of a transfer duct (10), and a closing device (11) by way of which the flow cross-section of the transfer duct (10) can be regulated, in particular closed, is provided in the transfer duct (10).

2. The air conditioning device (1) according to claim 1, **characterized in that** warm air coming from a heating device (8) flows in the warm air duct (W), cold air coming from an evaporator (7) flows in the cold air duct (K), temperature-controlled air that is mixed from cold air and warm air and used to ventilate the vehicle interior flows in the ventilation duct (B), temperature-controlled air that is mixed from cold air and warm air and is used to ventilate a footwell of the vehicle interior flows in the footwell duct (F), and warm air that is used to defrost a windshield and can be mixed with cold air from the cold air duct (K), flows in the defrost duct (D).

3. The air conditioning device (1) according to claim 1 or 2, **characterized in that** the defrost duct (D) is arranged adjacent to the cold air duct (K).

4. An air conditioning device (1) according to one or more of claims 1 to 3, **characterized in that** the defrost duct (D) and the cold air duct (K) are connected to each other.

5. An air conditioning device (1) according to claims 1 to 4, **characterized in that** the transfer duct (10) is integrated in the air conduction housing (9).

6. An air conditioning device (1) according to claims 1 to 5, **characterized in that** the closing device (11) is designed as a movable flap, the movement of which is coupled to an actuation for the rotation of the mixing and distribution flap (2) so as to close and open the transfer duct (10).

7. An air conditioning device (1) according to one or more of claims 1 to 4, **characterized in that** the cold air duct (K) and the defrost duct (D) are connected to each other by way of at least one additional duct.

8. An air conditioning device (1) according to one or more of claims 1 to 4, **characterized in that** a transfer duct (10) is form in the mixing and distribution flap (2) so as to provide a connection between the cold air duct (K) and the defrost duct (D).

9. An air conditioning device (1) according to one or more of claims 1 to 8, **characterized in that** the mixing and distribution flap (2) is substantially cylindrical and has a cylinder jacket surface, in which an indent (13) is provided, which acts as the transfer duct (10).

10. An air conditioning device (1) according to one or more of claims 1 to 4, **characterized in that** the mixing and distribution flap (2) comprises an opening (17) so as to supply cold air from the cold air duct (K) to the warm air from the warm air duct (W) in an interior space (16) of the mixing and distribution flap (2) during defrost operation of the air conditioning device.

11. The air conditioning device (1) according to claim 10, **characterized in that** the opening (17) is provided with a regulating element (18) having an opening cross-section that can be varied.

12. The air conditioning device (1) according to claim 11, **characterized in that** the regulation of the opening cross-section by the regulating element (18) is coupled to the actuation for rotation of the mixing and distribution flap (2).

13. An air conditioning device (1), in particular for a motor vehicle, comprising an air conduction housing (9), in which a plurality of air ducts are provided, which include at least two supply air ducts, comprising a warm air duct (W), through which warm air coming from the heating device (8) flows, and a cold air duct (K), through which cold air coming from an evaporator (7) flows, and at least three further air ducts, comprising a ventilation duct (B), a footwell duct (F) and a defrost duct (D), wherein a combined mixing and distribution flap (2) is provided so as to regulate the air temperature and air distribution of the air to be supplied to a vehicle interior, the flap being designed so that, in a position in which the one supply air duct (W, K) is completely open, the flap completely closes the respective other supply air duct (K, W), **characterized in that** the heating device (8) can be regulated so as to regulate the temperature of the warm air that is output via the defrost duct (D) during defrost operation of the air conditioning device (1), wherein the defrost duct (D) and the cold air duct (K) are connected by way of a transfer duct (10), and a closing device (11) by way of which the flow cross-section of the transfer duct (10) can be regulated, in particular closed, is provided in the transfer duct (10).

## Revendications

1. Système de climatisation (1), en particulier pour un véhicule automobile, comprenant un carter de guidage d'air (9) dans lequel est configurée une pluralité de conduits d'air qui présentent au moins deux conduits d'air d'alimentation qui comprennent un conduit d'air chaud (W) et un conduit d'air froid (K), et qui présentent au moins trois conduits d'air se prolongeant qui comprennent un conduit de ventilation (B), un conduit (F) de l'espace pour les pieds et un conduit de dégivrage (D) où, pour la régulation de la température de l'air et pour la répartition de l'air à fournir à l'habitacle d'un véhicule, il est prévu un volet combiné (2), mélangeur et répartiteur, qui est conçu de manière telle, que dans une position dans laquelle l'un des conduits d'air d'alimentation (W, K) est complètement ouvert, il ferme à chaque fois complètement l'autre conduit d'air d'alimentation (K, W),
**caractérisé en ce que**, au cours d'un fonctionnement du système de climatisation en mode dégivrage, dans une position dans laquelle le conduit d'air froid (K) est fermé complètement par le volet mélangeur et répartiteur (2), de l'air froid est mélangé à de l'air chaud circulant à travers le conduit de dégivrage (D), où le conduit de dégivrage (D) et le conduit d'air froid (K) sont reliés par un conduit de transfert (10), et il est prévu, dans le conduit de transfert (10), un dispositif de fermeture (11) par lequel peut être régulée, en particulier fermée, la section d'écoulement du conduit de transfert (10).

2. Système de climatisation (1) selon la revendication 1, **caractérisé en ce que** de l'air chaud provenant d'un dispositif de chauffage (8) circule dans le conduit d'air chaud (W), de l'air froid provenant d'un évaporateur (7) circule dans le conduit d'air froid (K), de l'air tempéré, mélangé à partir d'air froid et d'air chaud et servant à la ventilation de l'habitacle d'un véhicule, circule dans le conduit de ventilation (B), de l'air tempéré, mélangé à partir d'air froid et d'air chaud et servant à la ventilation d'un espace pour les pieds, dans l'habitacle du véhicule, circule dans le conduit (F) de l'espace pour les pieds, et de l'air chaud servant au dégivrage d'un pare-brise circule dans le conduit de dégivrage (D), air chaud qui peut être mélangé avec de l'air froid provenant du conduit d'air froid (K).

3. Système de climatisation (1) selon la revendication 1 ou 2, **caractérisé en ce que** le conduit de dégivrage (D) est disposé à proximité du conduit d'air froid (K).

4. Système de climatisation (1) selon l'une quelconque ou plusieurs des revendications 1 à 3, **caractérisé en ce que** le conduit de dégivrage (D) et le conduit d'air froid (K) sont reliés.

5. Système de climatisation (1) selon l'une quelconque des revendications 1 à 4, **caractérisé en ce que** le conduit de transfert (10) est intégré dans le carter de guidage d'air (9).

6. Système de climatisation (1) selon l'une quelconque des revendications 1 à 5, **caractérisé en ce que** le dispositif de fermeture (11) est conçu comme un volet mobile dont le mouvement de fermeture et d'ouverture du conduit de transfert (10) est couplé à une commande de rotation du volet mélangeur et répartiteur (2).

7. Système de climatisation (1) selon l'une quelconque ou plusieurs des revendications 1 à 4, **caractérisé en ce que** le conduit d'air froid (K) et le conduit de dégivrage (D) sont reliés par au moins un conduit supplémentaire.

8. Système de climatisation (1) selon l'une quelconque ou plusieurs des revendications 1 à 4, **caractérisé en ce qu'**un conduit de transfert (10) est configuré dans le volet mélangeur et répartiteur (2), afin de prévoir une communication entre le conduit d'air froid (K) et le conduit de dégivrage (D).

9. Système de climatisation (1) selon l'une quelconque ou plusieurs des revendications 1 à 8, **caractérisé en ce que** le volet mélangeur et répartiteur (2) est constitué essentiellement de façon cylindrique et présente une surface latérale du cylindre dans laquelle il est prévu un renfoncement (13) qui agit comme un conduit de transfert (10).

10. Système de climatisation (1) selon l'une quelconque ou plusieurs des revendications 1 à 4, **caractérisé en ce que** le volet mélangeur et répartiteur (2) présente une ouverture (17), pour fournir, au cours du fonctionnement du système de climatisation en mode dégivrage, de l'air froid provenant du conduit d'air froid (K), à l'air chaud provenant du conduit d'air chaud (W), dans un espace intérieur (16) du volet mélangeur et répartiteur (2).

11. Système de climatisation (1) selon la revendication 10, **caractérisé en ce que** l'ouverture (17) est dotée d'un élément de réglage (18) permettant de modifier la section de l'ouverture.

12. Système de climatisation (1) selon la revendication 11, **caractérisé en ce que** la régulation de la section de l'ouverture, par l'élément de réglage (18), est couplée à la commande de rotation du volet mélangeur et répartiteur (2).

13. Système de climatisation (1), en particulier pour un véhicule automobile, comprenant un carter de guidage d'air (9) dans lequel est configurée une pluralité de conduits d'air qui présentent au moins deux conduits d'alimentation qui comprennent un conduit d'air chaud (W) par lequel circule de l'air chaud provenant d'un dispositif de chauffage (8) et un conduit d'air froid (K) par lequel circule de l'air froid provenant d'un évaporateur (7), et qui présentent au moins trois conduits d'air se prolongeant qui comprennent un conduit de ventilation (B), un conduit (F) de l'espace pour les pieds et un conduit de dégivrage (D) où, pour la régulation de la température de l'air et pour la répartition de l'air à fournir à l'habitacle d'un véhicule, il est prévu un volet combiné (2), mélangeur et répartiteur, qui est conçu de manière telle, que dans une position dans laquelle l'un des conduits d'air d'alimentation (W, K) est complètement ouvert, il ferme à chaque fois complètement l'autre conduit d'air d'alimentation (K, W),
**caractérisé en ce que** le dispositif de chauffage (8) est réglable, pour réguler, au cours d'un fonctionnement du système de climatisation (1) en mode dégivrage, la température de l'air chaud fourni par le conduit de dégivrage (D), où le conduit de dégivrage (D) et le conduit d'air froid (K) sont reliés par un conduit de transfert (10), et il est prévu, dans le conduit de transfert (10), un dispositif de fermeture (11) par lequel peut être régulée, en particulier fermée, la section d'écoulement du conduit de transfert (10).
